# EUROPÄISCHE PATENTSCHRIFT

(11) **EP 2 580 268 B1**
(45) Veröffentlichungstag und Bekanntmachung des Hinweises auf die Patenterteilung: **14.02.2018**
(21) Anmeldenummer: 11715223.1
(22) Anmeldetag: 15.04.2011
(51) Int. Cl.: C09J 7/00, F16L 59/02

(54) **ISOLATIONSMATERIAL UND VERFAHREN ZUR ISOLATION**
INSULATION MATERIAL AND METHOD FOR INSULATION
MATÉRIAU ISOLANT ET PROCÉDÉ D'ISOLATION

(30) Priorität: 09.06.2010 DE 102010017305
(43) Veröffentlichungstag der Anmeldung: 17.04.2013
(73) Patentinhaber: ContiTech Elastomer-Beschichtungen GmbH, 30165 Hannover (DE)
(72) Erfinder: FLECK, Andreas, 30827 Garbsen (DE); PAULSEN, Hans-Peter, 37079 Göttingen (DE); STORRE, Jens, 37176 Nörten-Hardenberg (DE); LÖSCHNER, Jens, 37120 Bovenden (DE); EYMER, Heiko, 37154 Northeim (DE); HENSCHEL, Dagmar, 37154 Northeim (DE); LUTHER, Sabine, 30169 Hannover (DE); ZAHEL, Helge, 37154 Northeim (DE); MEYER, Stefan, 31535 Neustadt (DE)
(74) Vertreter: Preusser, Andrea
(86) Internationale Anmeldenummer: PCT/EP2011/055998
(87) Internationale Veröffentlichungsnummer: WO 2011/154188

(56) Entgegenhaltungen:
- EP-A2- 0 239 099
- EP-A2- 2 275 475
- WO-A1-2006/120186
- DE-A1- 1 960 795
- GB-A- 1 098 131
- GB-A- 2 068 397
- GB-A- 2 249 753
- US-B2- 6 333 364

## Beschreibung

Die Erfindung betrifft ein flexibles, bahnen- oder streifenförmiges Isolationsmaterial auf der Basis einer hochtemperaturbeständigen Kautschukmischung. Ferner betrifft die Erfindung ein Verfahren zur Isolation von Bauteilen mit dem Isolationsmaterial.

Für die thermische und/oder akustische Isolation von Bauteilen, insbesondere von Bauteilen mit komplexen Geometrien, sind nur wenige Lösungen auf dem Markt erhältlich, die auch bei Temperaturen von mehr als 130 °C einsetzbar sind. Üblicherweise werden zur Isolation von Bauteilen bei diesen hohen Temperaturen Mineralwollen eingesetzt, die zusätzlich mit einer Blech- oder Klebbandkaschierung versehen und damit stabilisiert werden. Derartige Isolationsmaterialien aus Mineralwolle mit Kaschierungen weisen folgende Nachteile auf: Die Montage bzw. Aufbringung auf das zu isolierende Bauteil und die Fixierung ist umständlich und daher teuer. Komplexe Bauteile (Formstücke) lassen sich auf Grund der geringen Flexibilität der Mineralwolle nur sehr schwer isolieren. Mineralwollen sind saugfähig, was bei Austritt von oder versehentlicher Benetzung mit Flüssigkeiten oder Bildung von Kondensat unter Umständen zum Verlust der Isolierwirkung und bei brennbaren Flüssigkeiten, wie z. B. Ölen, sogar zur Selbstentzündung führen kann. Bei der Aufbringung der Mineralwolle auf das zu isolierende Bauteil können außerdem Fasern und/oder Faserstaub frei werden, die bei längerer Exposition zu Krankheiten in den Atmungsorganen führen können.

Alternative Isolationsmaterialien auf der Basis von Polymeren, wie z. B. selbstblähende Dichtbänder, sind in der Regel in ihrer Einsatztemperatur auf Bereiche von maximal 130 °C begrenzt.

Zellenhaltige (verschäumte) Silikonkautschuke für isolierte Elektrokabel sind bspw. aus DE 1960 795 A1 bekannt. Die Zellstruktur wird dabei dadurch erhalten, dass Treibmittel und/ oder Füllstoff mit Lufteinschlüssen in die fließfähige, in Wärme aushärtbare Masse eingearbeitet werden. Anschließend wird diese Masse erhitzt, damit sich das eingeschlossene Gas ausdehnen kann oder das Treibmittel zersetzen kann, wobei schließlich das Gas freigelassen und somit eine Zellstruktur erhalten wird. Die Zellstruktur wird somit erst nach Aufbringen des Isolationsmaterials auf die Kabel erhalten.

In der GB 2 249 753 A wird ein flexibles, bahnenförmiges Material zur Wärmeisolierung z. B. von Schläuchen bei extrem hohen Temperaturen beschrieben, welches eine Lage aus einem ggf. geschäumten Silikonkautschuk und eine Metallfolie aufweist. Weitere Gewebelagen können vorgesehen werden. Die Silikonkautschuklage wird vor der Aufbringung auf das zu isolierende Bauteil stets vernetzt. Dabei wird die Kautschuklage üblicherweise als Paste oder Lösung aufgebracht, getrocknet und anschließend vernetzt. Durch die vorherige Vernetzung weist das Material in der Regel keine plastische Verformbarkeit mehr auf, da die Vernetzung (Vulkanisation) der Übergang des Elastomers vom plastischen in den elastischen Zustand bewirkt. Das Material kann sich daher nicht optimal an sehr komplexe Bauteilgeometrien anpassen und die gewünschte Position oft nicht beibehalten.

Der Erfindung liegt daher die Aufgabe zu Grunde, ein Isolationsmaterial für die Anwendung bei Temperaturen von mehr als 130 °C zur Verfügung zu stellen, welches sich einfach auf zu isolierende, komplexe Bauteile aufbringen lässt und seine gewünschte Form und Position beibehält. Ferner liegt der Erfindung die Aufgabe zu Grunde, ein einfaches und sicheres Verfahren zur Isolation von komplexen Bauteilen bei Temperaturen von mehr als 130 °C zur Verfügung zu stellen.

Gelöst wird diese Aufgabe erfindungsgemäß dadurch, dass die Kautschukmischung des Isolationsmaterials auf Silikonkautschuk basiert und zumindest teilweise unvernetzt und plastisch verformbar ist und dass die Kautschukmischung eine Porenstruktur aufweist und dass die Kautschukmischung 2 bis 12 phr expandierte Mikrokugeln enthält.

Unter "teilweise unvernetzt" ist dabei sowohl eine Kautschukmischung zu verstehen, die noch nicht verbrauchte Vernetzungschemikalien enthält, als auch eine Kautschukmischung, die mit wenig oder gar keinen Vernetzungschemikalien vernetzt ist, aber noch zumindest vernetzbare Polymerbestandteile aufweist.

Dadurch, dass die Kautschukmischung unvernetzte und damit plastisch verformbare Anteile aufweist oder vollständig unvernetzt und plastisch verformbar ist, können Bahnen oder Streifen des Isolationsmaterials einfach um die zu isolierenden Bauteile gewickelt oder aufgelegt und angedrückt werden. Die plastische Verformbarkeit sorgt dafür, dass komplexe Bauteile, wie z. B. Ventile, Wärmetauscher oder Rohrleitungssysteme, schnell und haltbar isoliert werden können. Das Isolationsmaterial schmiegt sich quasi an die Bauteile an. Die Aufbringung (Montage) ist einfach und damit kostengünstig.

Zusätzlich bietet ein derartiges Isolationsmaterial die Vorteile, dass es nicht saugfähig wie z. B. Mineralwolle ist und bei seiner Aufbringung keine gesundheitsgefährdenden Mineralfasern oder Faserstäube freigesetzt werden.

Der Einsatzbereich bei hohen Temperaturen wird durch die Verwendung einer hochtemperaturbeständigen Kautschukmischung gewährleistet.

Das Isolationsmaterial dient dann zur Reduzierung von Wärmeverlusten, als Verbrennungsschutz bei Berührung und zur Schalldämmung. Auch zur elektrischen Isolierung oder als Brandschutzbeschichtung kann das Isolationsmaterial verwendet werden.

Das erfindungsgemäße Verfahren zeichnet sich dadurch aus, dass das Isolationsmaterial, enthaltend die zumindest teilweise unvernetzte und plastisch verformbare Kautschukmischung auf Silikonkautschukbasis, welche eine Porenstruktur aufweist und welche 2 bis 12 phr expandierte Mikrokugeln enthält, auf das zu isolierende Bauteil aufgebracht wird und nach der Aufbringung durch Einwirkung von Temperatur und/oder Strahlung vernetzt bzw. weiter vernetzt wird. Das Isolationsmaterial ist nach der Aufbringung also noch vernetzbar.

Durch die nachträgliche Vernetzung wird das Isolationsmaterial langzeitstabil in seiner Position fixiert, da die Kautschukmischung bei der Vernetzung vom plastischen in den elastischen Zustand übergeht.

Gemäß einer vorteilhaften Weiterbildung der Erfindung weist die Kautschukmischung bei der Aufbringung des Isolationsmaterials auf die zu isolierenden Bauteile eine so hohe Klebrigkeit auf, dass die Rückstellkräfte des Isolationsmaterials nicht zu einer Ablösung des Materials von der Bauteiloberfläche führen. Das Isolationsmaterial bleibt durch seine Klebrigkeit dann an der zu isolierenden Oberfläche und auch an sich selbst haften und gewährleistet eine einfache Fixierung in der gewünschten Position.

Um die thermischen und akustischen Isolationseigenschaften zu verbessern, weist die Kautschukmischung eine Porenstruktur auf. Diese Porenstruktur erfolgt durch den Einsatz von Mikrokugeln, die in die Kautschukmischung eingemischt sind. Bei den Mikrokugeln handelt es sich um hohle Kugeln (Mikrosphären) mit einem Durchmesser im µm-Bereich aus Glas, Phenolharz, Kohlenstoff oder thermoplastischem Kunststoffmaterial. Es gibt sie in expandierbarer Form, wobei sie mit einem Treibmittel gefüllt sind und sich beim Erwärmen ausdehnen, oder in vorexpandierter Form; die Ausdehnung ist hier schon abgeschlossen. Derartige Mikrokugeln werden z. B. unter dem Namen Expancel® von der Firma Akzo Nobel vertrieben. Erfindungsgemäß muss die Kautschukmischung expandierte Mikrokugeln enthalten.

Die Kautschukmischung des Isolationsmaterials kann gemäß einer bevorzugten Weiterbildung der Erfindung zur weiteren Verbesserung der Isolationseigenschaften noch nicht zersetzte chemische Treibmittel enthalten. Auch in Mikrokugeln verkapselte Treibmittel können eingesetzt werden. Diese Treibmittel bieten - zusätzlich zu der ggf. schon vorhandenen Porenstruktur - die Möglichkeit, nach der Aufbringung auf das zu isolierende Material Poren auszubilden. Werden in Mikrokugeln verkapselte Treibmittel eingesetzt, bieten diese den Vorteil der Bildung einer geschlossenen Porenstruktur, die für Isolationszwecke wegen geringerer Konvektion in den Poren besser geeignet ist.

Gemäß Verfahrensanspruch 5 kann die Ausbildung der Poren bzw. der weiteren Poren durch die Einwirkung von Temperatur und/oder Strahlung erfolgen. Bei der Strahlung kann es sich um IR-Strahlung, Mikrowellen oder sonstige energiereiche Strahlung handeln. Die Einwirkung von Temperatur kann beispielsweise durch das Erwärmen mit heißer Luft durch einen Föhn erfolgen. Besonders einfach und schnell ist ein Verfahren, bei dem die Temperatureinwirkung und damit die Ausbildung der Poren durch das zu isolierende Bauteil erfolgt. Durch die Eigenwärme des zu isolierenden Bauteils wird die chemische Zersetzung ausgelöst. Die Ausbildung der Poren erfolgt dabei von innen nach außen.

Um den Vorgang der Ausbildung der Poren nach der Aufbringung auf das zu isolierende Bauteil weiter zu verbessern und auch im äußeren Bereich eine hohe Anzahl an Poren auszubilden, hat es sich als vorteilhaft erwiesen, wenn die Kautschukmischung eine hoch wärmeleitfähige Substanz enthält, die nach der Aufbringung auf das zu isolierende Bauteil verdunstet. Zunächst trägt diese Substanz dazu bei, dass die Wärme vom Bauteil schneller und besser in die äußeren Bereiche gelangt, damit auch dort Poren ausgebildet werden können, und dann verdunstet es, damit die Isolierwirkung nicht beeinträchtigt wird. Als hoch wärmeleitfähige Substanz kann beispielsweise Wasser oder Glycerin eingesetzt werden.

Für eine robuste Verarbeitung ist es von Vorteil, wenn das Isolationsmaterial eine hohe mechanische Stabilität aufweist. Damit kann ein Einreißen des Isolationsmaterials bei der Aufbringung verhindert werden. Die mechanische Stabilisierung kann durch Füllstoffe oder Festigkeitsträger erfolgen. Die Festigkeitsträger können in Form von Kurzfasern in die Kautschukmischung eingebracht werden. Gemäß einer bevorzugten Weiterbildung der Erfindung weist das Isolationsmaterial jedoch Festigkeitsträgerlagen auf. Dabei kann es sich um Gewebe, Gewirke oder Gestricke handeln, die eine gewisse Dehnung zulassen. Als Material für die Festigkeitsträger kommen z. B. Glas, Baumwolle, Polyamid oder Aramid in Frage.

Zur weiteren Verbesserung des Isolationsmaterials können weitere Schichten und/oder Lagen vorgesehen werden. So kann zur Reduzierung des Emissionsgrades eine Metallfolie aufdubliert werden. Auch spezielle Lackschichten können zu diesem Zweck aufgebracht werden.

Das Isolationsmaterial basiert auf einer hochtemperaturbeständigen Kautschukmischung. Als Kautschukuke können dabei z. B. Silikonkautschuk, hydrierter Nitrilkautschuk (HNBR), Fluorkautschuk, Acrylatkautschuk, Ethylen-Acrylat-Co- und Terpolymere, Ethylen-Propylen-Dienkautschuk, Epichlorhydrinkautschuk und Verschnitte aus diesen eingesetzt werden. Vorzugsweise basiert die Kautschukmischung auf Silikonkautschuk, da dieser Kautschuk eine besonders hohe Temperaturbeständigkeit, plastische Verformbarkeit und eine gewisse Klebrigkeit aufweist. Bevorzugt werden HTV-Typen, die sowohl peroxidisch vernetzbar als auch additionsvernetzbar sein können.

Erfindungsgemäß enthält die Kautschukmischung für das Isolationsmaterial 2 bis 12 phr expandierte Mikrokugeln. Auf diese Weise erhält das Isolationsmaterial eine ausreichende Porenstruktur für eine gute thermische und akustische Isolation. Expandierte Mikrokugeln bieten gegenüber herkömmlichen chemischen Treibmitteln den Vorteil, dass sie eine homogene, geschlossen-porige Zellstruktur bewirken. Je höher die Menge an expandierten Mikrokugeln, desto besser wird durch den höheren Porenanteil die Isolationswirkung. Bei zu großen Mengen an Mikrokugeln können sich jedoch verarbeitungstechnische Probleme bei der Mischungsherstellung ergeben und das Isolationsmaterial verliert an Festigkeit, was beim aufbringen auf die zu isolierenden Bauteile von Nachteil ist. Das Isolationsmaterial kann dann leicht einreißen.

Das erfindungsgemäße Isolationsmaterial lässt sich nach dem Fachmann bekannten Verfahren herstellen, wobei zunächst eine Kautschukmischung mit allen benötigten Zuschlagstoffen erzeugt wird und die Mischung im Anschluss zu Bahnen kalandriert, ggf. mit weiteren Lagen kaschiert und ggf. in Streifen geschnitten wird.

Anhand eines Ausführungsbeispiels soll die Erfindung näher erläutert werden, ohne dabei auf dieses beschränkt zu sein.

Es wurde eine auf Silikonkautschuk basierende Kautschukmischung mit der in Tabelle 1 dargestellten Zusammensetzung hergestellt. In der rechten Spalte der Tabelle sind die möglichen Mengenbereiche für eine Silikonkautschukmischung angegeben. Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

**Tabelle 1**

| Substanz | Menge in phr | mögliche Mengenbereiche in phr |
|---|---|---|
| Silikonkautschuk^{a} | 100 | 100 |
| Hitzestabilisatoren | 1,95 | 0-6 |
| Verarbeitungshilfsmittel | 0,3 | 0-3 |
| Peroxidvernetzer | 1,05 | 0,3-4 |
| Silikonöl | 9,30 | 2-20 |
| vorexpandierte Mikrokugeln^{b} | 5,58 | 2-12 |
| chemisches Treibmittel | - | 0-10 |
| expandierbare Mikrokugeln^{c} | 1,5 | 0-10 |
| sonstige Additive (z. B. Flammschutzmittel, leitfähige Füllstoffe) | - | 0-12 |

| | | |
|---|---|---|
| ^{a} Elastosil® R 420/50 S, Wacker Chemie AG, Deutschland ^{b} Expancel® 920 DE 40 d30, Akzo Nobel N. V., Niederlande ^{c} Expancel© 920 DU 80, Akzo Nobel N. V., Niederlande | | |

Die Mischung wurde zu Bahnen einer Dicke von ca. 3 mm kalandriert. Das Material zeichnet sich durch eine gleichmäßige geschlossene Porenstruktur durch die Verwendung der vorexpandierten Mikrokugeln aus. Es zeigt eine Wärmeleitfähigkeit von ca. 0,1 W/(m*K) und weist daher gute Isolationseigenschaften auf. Die Klebrigkeit, gemessen mit einem Tackinessmessgerät, beträgt 2 N.

Das Isolationsmaterial wurde in Streifen geschnitten und damit verschiedene Prüfarmaturen, Rohrleitungen mit T-Stücken und 90°-Bögen sowie flexible Schlauchverbindungen zur Isolation doppelt und leicht überlappend umwickelt. Das Isolationsmaterial ließ sich auf Grund seiner plastischen Verformbarkeit gut verarbeiten und auf die zu isolierenden Bauteile aufbringen. Auf Grund der Klebrigkeit haftete es gut an den einzelnen Bauteilen. Die Bauteile wurden mit 200 °C heißem Thermalöl durchströmt. Dabei bildeten sich durch die Expansion der weiteren expandierbaren Mikrokugeln weitere Poren aus und die Silikonkautschukmischung vernetzte peroxidisch. Temperaturmessungen an der Außenseite des Isolationsmaterials nach 24-stündigem Durchströmen mit 200 °C heißer Flüssigkeit zeigten eine Außentemperatur von ca. 70 °C an. Dies entspricht einer Energieersparnis von ca. 70 %. Das Isolationsmaterial bietet eine hervorragende thermische und akustische Isolation auch bei Temperaturen von mehr als 130 °C.

## Patentansprüche

1. Flexibles, bahnen- oder streifenförmiges Isolationsmaterial auf der Basis einer hochtemperaturbeständigen Kautschukmischung,
**dadurch gekennzeichnet, dass** die Kautschukmischung des Isolationsmaterials auf Silikonkautschuk basiert und zumindest teilweise unvernetzt und plastisch verformbar ist und dass die Kautschukmischung eine Porenstruktur aufweist und dass die Kautschukmischung 2 bis 12 phr expandierte Mikrokugeln enthält.

2. Isolationsmaterial nach zumindest einem der vorhergehenden Ansprüche, **dadurch gekennzeichnet, dass** die Kautschukmischung noch nicht zersetzte chemische Treibmittel enthält.

3. Isolationsmaterial nach zumindest einem der vorhergehenden Ansprüche, **dadurch gekennzeichnet, dass** die Kautschukmischung in Mikrokugeln verkapselte Treibmittel enthält.

4. Isolationsmaterial nach zumindest einem der vorhergehenden Ansprüche, **dadurch gekennzeichnet, dass** es Festigkeitsträgerlagen aufweist.

5. Verfahren zur Isolation von Bauteilen mit dem Isolationsmaterial nach einem der Ansprüche 1 bis 4, **dadurch gekennzeichnet, dass** das Isolationsmaterial, enthaltend die zumindest teilweise unvernetzte und plastisch verformbare Kautschukmischung auf Silikonkautschukbasis, welche eine Porenstruktur aufweist und 2 bis 12 phr expandierte Mikrokugeln enthält, auf das zu isolierende Bauteil aufgebracht wird und nach der Aufbringung durch Einwirkung von Temperatur und/oder Strahlung vernetzt bzw. weiter vernetzt wird.

6. Verfahren nach Anspruch 5, **dadurch gekennzeichnet, dass** nach der Aufbringung durch Einwirkung von Temperatur und/oder Strahlung weitere Poren ausgebildet werden.

## Claims

1. Flexible sheet or strip insulation material based on a high-temperature-resistant rubber mixture, **characterized in that** the rubber mixture of the insulation material is based on silicone rubber and is at least partly uncrosslinked and plastically deformable and **in that** the rubber mixture has a pore structure and **in that** the rubber mixture comprises 2 to 12 phr of expanded microspheres.

2. Insulation material according to at least one of the preceding claims, **characterized in that** the rubber mixture comprises as yet undecomposed chemical blowing agents.

3. Insulation material according to at least one of the preceding claims, **characterized in that** the rubber mixture comprises blowing agents encapsulated in microspheres.

4. Insulation material according to at least one of the preceding claims, **characterized in that** it comprises strengthener plies.

5. Process for insulating components with the insulation material according to any of Claims 1 to 4, **characterized in that** the insulation material comprising the at least partly uncrosslinked and plastically deformable rubber mixture which is based on silicone rubber, has a pore structure and comprises 2 to 12 phr of expanded microspheres is applied to the component to be insulated and, after application, crosslinked or crosslinked further by thermal and/or radiative action.

6. Process according to Claim 5, **characterized in that** the application is followed by formation of further pores by thermal and/or radiative action.

## Revendications

1. Matériau isolant flexible en forme de feuilles ou de bandes à base d'un mélange caoutchouteux à haute résistance thermique,
**caractérisé en ce que** le mélange caoutchouteux du matériau isolant est à base d'un caoutchouc de silicone et est au moins partiellement non réticulé et déformable plastiquement, et **en ce que** le mélange caoutchouteux présente une structure poreuse, et **en ce que** le mélange caoutchouteux contient 2 à 12 pce de microbilles expansées.

2. Matériau isolant selon au moins l'une quelconque des revendications précédentes, **caractérisé en ce que** le mélange caoutchouteux content des agents gonflants chimiques encore non décomposés.

3. Matériau isolant selon au moins l'une quelconque des revendications précédentes, **caractérisé en ce que** le mélange caoutchouteux content des agents gonflants encapsulés dans des microbilles.

4. Matériau isolant selon au moins l'une quelconque des revendications précédentes, **caractérisé en ce qu'**il comprend des couches de renfort.

5. Procédé d'isolement de composants avec le matériau isolant selon au moins l'une quelconque des revendications 1 à 4, **caractérisé en ce que** le matériau isolant contenant le mélange caoutchouteux au moins partiellement non réticulé et déformable plastiquement à base de caoutchouc de silicone, qui présente une structure poreuse et contient 2 à 12 pce de microbilles expansées, est appliqué sur le composant à isoler et réticulé ou davantage réticulé après l'application sous l'effet de la température et/ou d'un rayonnement.

6. Procédé selon la revendication 5, **caractérisé en ce que** des pores supplémentaires sont formés après l'application sous l'effet de la température et/ou d'un rayonnement.
